# EUROPEAN PATENT APPLICATION

(11) **EP 4 810 790 A1**
(43) Date of publication of application: **23.09.2026**
(21) Application number: 24921102.0
(22) Date of filing: 05.02.2024
(51) Int. Cl.: F02P 5/15, B60W 10/06, B60W 20/00, B60W 40/00

(54) **VEHICLE CONTROL METHOD AND APPARATUS, VEHICLE, AND STORAGE MEDIUM**

(30) Priority: 31.01.2024 CN 202410145293
(71) Applicant: Chongqing Changan Automobile Co., Ltd., Chongqing 400023 (CN)
(72) Inventor: ZHAO, Yunchao, Chongqing 400023 (CN); HU, Xianli, Chongqing 400023 (CN); WANG, Bozhou, Chongqing 400023 (CN)
(74) Representative: Groth & Co. KB
(86) International application number: PCT/CN2024/076125
(87) International publication number: WO 2025/161054

(57) **Abstract**

A vehicle control method is disclosed, comprising: acquiring a current torque and a demanded torque of an engine, wherein the current torque and the demanded torque are both torques for driving a vehicle; when the demanded torque is less than the current torque, determining a magnitude relationship between the demanded torque and a preset threshold, and/or determining a magnitude relationship between a torque reduction slope and a torque slope threshold, wherein the torque slope threshold is a minimum torque slope that can be achieved by the engine at a current rotational speed by reducing an intake air amount; and when the demanded torque is less than the preset threshold or the torque reduction slope is less than the torque slope threshold, determining an ignition retard angle. The method can avoid the problem of unintended acceleration or shudder that is prone to occurrence when the demanded torque of an engine drops rapidly, thereby improving vehicle smoothness, and further enhancing driving experience. Also disclosed are a vehicle control apparatus, a vehicle, and a computer-readable storage medium.

## Description

### TECHNICAL FIELD

The present application relates to the technical field of vehicles, in particular to a vehicle control method and apparatus, a vehicle, and a storage medium.

### BACKGROUND

An automobile engine is a device that provides power to an automobile and is considered the heart of the automobile, determining the power performance, fuel economy, stability, and environmental friendliness of the automobile. Depending on the power source, automobile engines can be classified into diesel engines, gasoline engines, electric motors for electric vehicles, and hybrid powertrains and the like.

A hybrid vehicle is a type of vehicle that combines a conventional internal combustion engine with an electric motor. It can use both fuel and electricity to drive the vehicle and intelligently switch the operating mode of the engine based on driving conditions and demands, so as to improve fuel economy and reduce exhaust emissions. When driving at low speeds or during startup, the vehicle primarily relies on an electric motor for power, while the internal combustion engine is either turned off or operates in a low-power mode. When driving at high speeds or when more power is required, the internal combustion engine starts operating and provides power together with the electric motor. This intelligent switching method allows the engine to always operate in a highly efficient state, thereby reducing fuel consumption and emissions.

When the demanded torque for the engine-driven vehicle drops suddenly, such as during a rapid tip-out or braking, the engine torque is required to respond quickly to a torque reduction request. Conventional engine torque reduction is primarily achieved by reducing the intake air amount. However, due to the slow response characteristics of airflow transmission, it is difficult to respond in time under operating conditions requiring a sudden torque drop. This consequently leads to unintended acceleration or shudder (jerk), thereby causing drivability issues.

### SUMMARY OF THE INVENTION

In view of this, the present application provides a vehicle control method and apparatus, a vehicle, and a storage medium, so as to solve the problem that the existing vehicle power control fails to respond promptly to sudden torque drop conditions, which tends to cause unintended acceleration or jerk.

In a first aspect, the present application provides a vehicle control method, wherein the method includes:
acquiring a current torque and a demanded torque of an engine, wherein the current torque and the demanded torque are both torques for driving a vehicle;
when the demanded torque is less than the current torque, determining a magnitude relationship between the demanded torque and a preset threshold, and/or determining a magnitude relationship between a torque reduction slope and a torque slope threshold, wherein the torque slope threshold is a minimum torque slope that can be achieved by the engine at a current rotational speed by reducing an intake air amount; and
when the demanded torque is less than the preset threshold or the torque reduction slope is less than the torque slope threshold, determining an ignition retard angle.

In an optional embodiment, the step of determining an ignition retard angle includes:
acquiring a first torque after the intake air amount of the engine is reduced; and
determining a new ignition angle based on the first torque.

In an optional embodiment, the step of acquiring a current torque and a demanded torque of an engine includes:
acquiring a demanded power of the entire vehicle; and
determining the demanded torque based on the demanded power.
acquiring target parameters, wherein the target parameters include at least one of the following: throttle opening degree, brake pedal state, braking energy recovery torque, and battery state of charge; and
determining the demanded power based on the target parameters.

In an optional embodiment, the step of determining the demanded torque based on the demanded power includes:
acquiring a rotational speed of the engine, and a rotational speed and a torque of a drive motor; and
determining the demanded torque of the engine based on the rotational speed of the engine, the rotational speed and the torque of the drive motor, and the demanded power of the entire vehicle.

In an optional embodiment, before determining a magnitude relationship between the demanded torque and a preset threshold, the method further includes:
acquiring a correspondence relationship between a rotational speed of the engine and the preset threshold; and
determining the preset threshold corresponding to the current rotational speed of the engine based on the acquired correspondence relationship.

In a second aspect, the present application provides a vehicle control apparatus, wherein the apparatus includes:
an acquisition module configured to acquire a current torque and a demanded torque of an engine, wherein the current torque and the demanded torque are both torques for driving a vehicle;
a determination module configured to, when the demanded torque is less than the current torque, determine a magnitude relationship between the demanded torque and a preset threshold, and/or determine a magnitude relationship between a torque reduction slope and a torque slope threshold, wherein the torque slope threshold is a minimum torque slope that can be achieved by the engine at a current rotational speed by reducing an intake air amount; and
an intervention module configured to, when the demanded torque is less than the preset threshold or the torque reduction slope is less than the torque slope threshold, determine an ignition retard angle.

In an optional embodiment, the intervention module includes:
a first torque acquisition unit configured to acquire a first torque after the intake air amount of the engine is reduced; and
a new ignition angle determination unit configured to determine a new ignition angle based on the first torque.

In an optional embodiment, the acquisition module includes:
an entire vehicle demanded power acquisition unit configured to acquire a demanded power of the entire vehicle; and
a demanded torque determination unit configured to determine the demanded torque based on the demanded power.

In an optional embodiment, the entire vehicle demanded power acquisition unit includes:
a first parameter acquisition subunit configured to acquire target parameters, wherein the target parameters include at least one of the following: throttle opening degree, brake pedal state, braking energy recovery torque, and battery state of charge; and
a demanded power determination subunit configured to determine the demanded power based on the target parameters.

In an optional embodiment, the demanded torque determination unit includes:
a second parameter acquisition subunit configured to acquire a rotational speed of the engine, and a rotational speed and a torque of a drive motor; and
a demanded torque calculation subunit configured to determine the demanded torque of the engine based on the rotational speed of the engine, the rotational speed and the torque of the drive motor, and the demanded power of the entire vehicle.

In an optional embodiment, the apparatus further includes:
a correspondence acquisition module configured to acquire a correspondence relationship between a rotational speed of the engine and the preset threshold; and
a preset threshold determination module configured to determine the preset threshold corresponding to the current rotational speed of the engine based on the acquired correspondence relationship.

In a third aspect, the present application provides a vehicle, including a memory and a processor, wherein the memory and the processor are communicatively connected to each other; the memory has computer instructions stored therein; and the processor is configured to execute the computer instructions to perform the vehicle control method described in the above first aspect or any corresponding embodiment thereof.

In a fourth aspect, the present application provides a computer-readable storage medium, wherein the computer-readable storage medium has computer instructions stored therein, and the computer instructions are configured to cause a computer to perform the vehicle control method according to the above first aspect or any corresponding embodiment thereof.

The present application has the following beneficial effects:

The vehicle control method and apparatus, the vehicle, and the storage medium provided in this embodiment are applicable to scenarios where a hybrid vehicle is operating in a parallel mode and events such as a rapid tip-out, braking, or a switch to a series mode occur, or to scenarios where a conventional fuel vehicle experiences a rapid tip-out or braking. In these scenarios, the demanded torque for the engine to directly drive the vehicle drops suddenly. The vehicle control method provided in this embodiment ensures that the engine can respond promptly to the reduced torque demand, thereby avoiding unintended acceleration or shudder. This effectively prevents drivability issues, improves vehicle smoothness, and further enhances the driving experience.

### BRIEF DESCRIPTION OF THE DRAWINGS

To more clearly illustrate the specific embodiments of the present application or the technical solutions in the prior art, the drawings required for the description of the specific embodiments or the prior art will be briefly introduced below. Apparently, the drawings in the following description are some embodiments of the present application. For those skilled in the art, other drawings may be obtained based on these drawings without any creative effort.
FIG. 1 is a schematic flowchart of a vehicle control method according to an embodiment of the present application.
FIG. 2 is a schematic flowchart of another vehicle control method according to an embodiment of the present application.
FIG. 3 is a schematic flowchart of still another vehicle control method according to an embodiment of the present application.
FIG. 4 is a structural block diagram of a vehicle control apparatus according to an embodiment of the present application.
FIG. 5 is a schematic diagram of a hardware structure of a vehicle according to an embodiment of the present application.

### DETAILED DESCRIPTION OF SPECIFIC EMBODIMENTS

In order to make the objects, technical solutions, and advantages of the embodiments of the present application clearer, the technical solutions in the embodiments of the present application will be clearly and completely described below with reference to the accompanying drawings in the embodiments of the present application. Apparently, the described embodiments are some but not all of the embodiments of the present application. Based on the embodiments in the present application, all other embodiments obtained by those skilled in the art without making any creative effort shall fall within the protection scope of the present application.

An embodiment of the present application provides a vehicle control method, which achieves rapid response of the engine torque by retarding the ignition angle, thereby avoiding unintended acceleration or shudder and improving vehicle smoothness.

According to an embodiment of the present application, an embodiment of a vehicle control method is provided. It should be noted that the steps shown in the flowcharts of the accompanying drawings may be executed in a computer system comprising a set of executable computer instructions. Moreover, although a logical order is shown in the flowcharts, in some cases, the steps shown or described may be performed in an order different from that described herein.

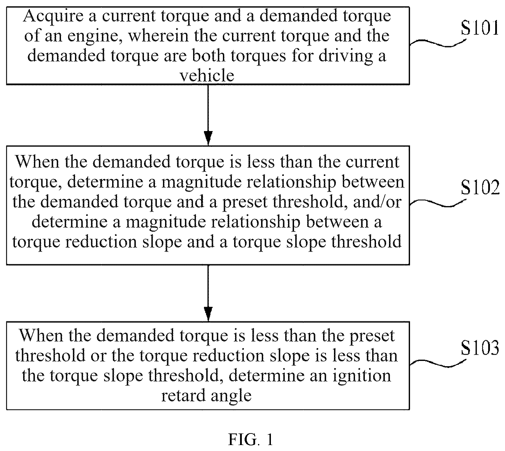

In this embodiment, a vehicle control method is provided, which is applicable to a vehicle. The vehicle may be a conventional fuel vehicle or a new energy vehicle, such as a hybrid vehicle (specifically, a Plug-in Hybrid Electric Vehicle, PHEV). The method may be particularly applied to a vehicle controller, and the controller includes a controller related to power control. FIG. 1 is a flowchart of a vehicle control method according to an embodiment of the present application. As shown in FIG. 1, the flowchart includes the following steps:
Step S101: acquiring a current torque and a demanded torque of an engine, wherein the current torque and the demanded torque are both torques for driving a vehicle.

Specifically, the current torque and the demanded torque of the engine may be determined based on relevant parameters received by a Powertrain Control Unit (PCU) of a vehicle. Parameters received by the PCU include: vehicle speed, throttle opening degree, brake pedal state, battery state of charge, braking energy recovery torque, PI generator rotational speed, PI generator torque, P3 drive motor rotational speed, P3 drive motor torque, rotational speed of the engine, and engine torque and the like. The rotational speed of the engine may be determined based on wheel speed and transmission gear ratio.

Both the current torque and the demanded torque herein refer to the torque used for directly driving a vehicle, excluding the torque used for power generation. Therefore, for a hybrid vehicle, the vehicle is required to operate in a parallel mode. If the vehicle is operating in a series mode, the torque output by the engine is not directly used to drive the vehicle, but rather to drive the generator for power generation.

Therefore, for a hybrid vehicle, before acquiring the current torque of the engine, it may first be determined whether the current operating state of the vehicle powertrain is in a parallel mode or a series mode. If the vehicle is in a parallel mode, the method is executed; otherwise, it is not necessary to execute the method.

Step S102: when the demanded torque is less than the current torque, determining a magnitude relationship between the demanded torque and a preset threshold, and/or determining a magnitude relationship between a torque reduction slope and a torque slope threshold, wherein the torque slope threshold is a minimum torque slope that can be achieved by the engine at a current rotational speed by reducing an intake air amount. Both the torque reduction slope and the torque slope threshold herein are negative numbers. Therefore, the smaller the value, the faster the torque drops. The torque reduction slope herein refers to the reduction slope from the current torque to the demanded torque.

In this embodiment, in scenarios of rapid tip-out or braking, the demanded torque of the engine is less than the current actual torque. In this case, if the engine cannot promptly respond to the lower demanded torque, unintended acceleration or shudder may occur. In other words, if the engine can promptly respond to the lower demanded torque, such an issue will not arise. Therefore, it is necessary to determine whether the engine can promptly respond to the lower demanded torque. This embodiment provides a determination method. Through the method, whether the engine can promptly respond to the lower demanded torque can be determined by determining the magnitude relationship between the demanded torque and a preset threshold, and/or the magnitude relationship between the torque reduction slope and the torque slope threshold.

Step S103: when the demanded torque is less than the preset threshold or the torque reduction slope is less than the torque slope threshold, determining an ignition retard angle. That is, whether the demanded torque is less than the preset threshold or the torque reduction slope is less than the torque slope threshold, the engine may fail to promptly respond to a lower demanded torque. In this case, the efficiency of the engine output torque can be reduced by retarding the ignition angle. The ignition angle of an engine is one of the important parameters affecting the operating performance of the engine, while retarding the ignition angle is a method for adjusting the ignition angle. Retarding the ignition angle, which is also referred to as ignition angle intervention, can be specifically achieved by the PCU generating an ignition angle intervention signal and sending the signal to an engine management system.

The vehicle control method provided in this embodiment is applicable to scenarios where a hybrid vehicle is operating in a parallel mode and events such as a rapid tip-out, braking, or a switch to a series mode occur, or to scenarios where a conventional fuel vehicle experiences a rapid tip-out or braking. In these scenarios, the demanded torque for the engine to directly drive the vehicle drops suddenly. The vehicle control method provided in this embodiment ensures that the engine can respond promptly to the reduced torque demand, thereby avoiding unintended acceleration or shudder. This effectively prevents drivability issues, improves vehicle smoothness, and further enhances the driving experience.

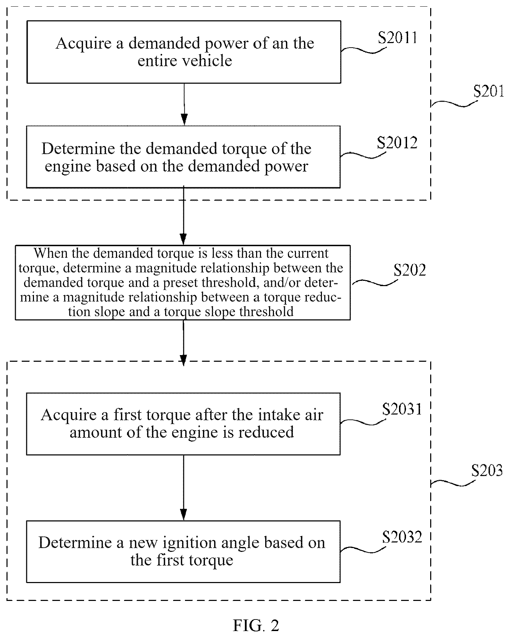

In this embodiment, a vehicle control method is provided, which is applicable to the above conventional fuel vehicle or plug-in hybrid electric vehicle. FIG. 2 is a flowchart of a vehicle control method according to an embodiment of the present application. As shown in FIG. 2, the flowchart includes the following steps:
Step S201: acquiring a current torque and a demanded torque of an engine, wherein the current torque and the demanded torque are both torques for driving a vehicle.

The current torque of the engine may be obtained by a torque measurement device.

In some optional embodiments, step S201, i.e., acquiring a current torque and a demanded torque of an engine, includes:
Step S2011: acquiring a demanded power of the entire vehicle.

Specifically, the step of acquiring a demanded power of the entire vehicle includes:
acquiring target parameters, wherein the target parameters include at least one of the following: throttle opening degree, brake pedal state, braking energy recovery torque, and battery state of charge (SOC); and
determining the demanded power based on the target parameters.

The demanded power of the entire vehicle is influenced by multiple factors. When the throttle opening degree increases, the demanded power of the entire vehicle increases correspondingly. Changes in the brake pedal state also affect the demanded power of the entire vehicle. For example, during braking, the braking energy recovery torque reduces the demanded power of the entire vehicle. The battery state of charge also affects the demanded power of the entire vehicle, because the charging and discharging states of the battery affect the operating efficiency of both the engine and the electric motor. When the demanded power of the entire vehicle is determined, calculation and analysis may be performed based on specific driving states and operating conditions. The variations in the demanded power of the entire vehicle may be simulated and analyzed by, for example, establishing a mathematical model or using simulation software.

In a hybrid vehicle, the braking energy is recovered after the brake pedal is depressed. The recovered energy is related not only to the braking energy recovery torque but also to the battery state of charge. The determination of the demanded power of the entire vehicle needs to take into account the recovered energy.

Step S2012: determining the demanded torque of the engine based on the demanded power.

Specifically, the step of determining the demanded torque based on the demanded power includes:
acquiring a rotational speed of the engine, and a rotational speed and a torque of a drive motor; and
determining the demanded torque of the engine based on the rotational speed of the engine, the rotational speed and the torque of the drive motor, and the demanded power of the entire vehicle.

In this embodiment, when the plug-in hybrid electric vehicle is operating in a parallel mode, the engine and the P3 drive motor jointly output the torque for driving the vehicle. That is, the engine and the P3 drive motor jointly output the energy for driving the vehicle. Therefore, when determining the demanded torque of the engine based on the demanded power of the entire vehicle, it is necessary to take into account the demanded power of the drive motor. Power, rotational speed and torque have a functional relationship with one another.

Regarding the calculation of the demanded torque of the engine:
One approach may be as follows: first, calculate the output power of the drive motor based on its rotational speed and torque; subtract the output power of the drive motor from the demanded power of the entire vehicle to obtain the demanded power of the engine; then, calculate the rotational speed and torque of the engine based on the demanded power of the engine.

Another approach may be as follows: determine the most appropriate output power of the drive motor based on the braking energy recovery torque and the battery state of charge; then, subtract the output power of the drive motor determined in the previous step from the demanded power of the entire vehicle to obtain the demanded power of the engine; then, obtain the demanded torque of the engine based on the rotational speed and the demanded power of the engine. This approach mainly takes into account the balance of the battery state of charge, aiming to maintain the battery state of charge at an appropriate level. This ensures both good reserve power and good fuel economy.

In addition, a hybrid vehicle is equipped with multiple power sources, each of the power sources having a most efficient operating region. To make full use of this characteristic, various energy management strategies are employed in the related art. When different energy management strategies are employed, the demanded power allocated to the engine in the above scenarios may be inconsistent. The selection of the energy management strategy is not limited in the embodiments of the present application. .

Step S202: when the demanded torque is less than the current torque, determining a magnitude relationship between the demanded torque and a preset threshold, and/or determining a magnitude relationship between a torque reduction slope and a torque slope threshold, wherein the torque slope threshold is a minimum torque slope that can be achieved by the engine at a current rotational speed by reducing an intake air amount.

In some optional embodiments, before step S202, i.e., before determining a magnitude relationship between the demanded torque and a preset threshold, the method further includes:
Step S202a: acquiring a correspondence relationship between a rotational speed of the engine and the preset threshold.

Specifically, the correspondence relationship may be in the form of a correspondence relationship table or a function.

Step S202b: determining the preset threshold corresponding to the current rotational speed of the engine based on the acquired correspondence relationship.

The preset threshold may be the minimum stable torque at which the engine can operate across various rotational speeds as the throttle valve closes (i.e., as the intake air amount decreases). This threshold may be referred to as a minimum load threshold.

Step S203: when the demanded torque is less than the preset threshold or the torque reduction slope is less than the torque slope threshold, determining an ignition retard angle.

In some optional embodiments, step S203, i.e., determining an ignition retard angle, includes:
Step S2031: acquiring a first torque after the intake air amount of the engine is reduced.
Step S2032: determining a new ignition angle based on the first torque.

In this embodiment, after the demanded torque of the engine decreases, the vehicle will immediately reduce the output torque by decreasing the intake air amount. Specifically, the PCU may send the demanded torque to an engine management system (EMS), and the EMS controls the throttle valve to reduce the intake air amount. Based on the determination of the preceding conditions, it is known that the demanded torque is less than the preset threshold, or the torque reduction slope is less than the torque slope threshold. Therefore, it can be known that simply reducing the intake air amount to lower the output torque is insufficient, and it is also necessary to trigger ignition angle intervention control, i.e., to lower the output torque by retarding the ignition angle. The specific amount of ignition angle retard needs to be determined based on the output torque after the intake air amount is reduced. Retarding the ignition angle is equivalent to reducing the torque output efficiency. Assuming that the torque output efficiency (corresponding to the ignition efficiency) under a normal ignition angle (i.e., a base ignition angle) is 1, the torque output efficiency gradually decreases as the ignition angle is retarded. Therefore, the torque output efficiency may be determined according to a proportional relationship between the demanded torque and the first torque, and then a new ignition angle may be determined based on the torque output efficiency.

The first torque herein may not be an actual output torque obtained by measurement or calculation, but rather an estimated first torque or an empirical value. That is, at the current rotational speed and the current output torque, after the intake air amount is reduced, the output torque may or should be reduced to a certain value. When estimating the reduction amount of the output torque after the intake air amount is reduced, in addition to considering the reduction in intake air amount, factors such as intake air temperature and/or rotational speed of the engine may also need to be considered. Furthermore, a reduction in intake air amount leads to a drop in pressure inside the cylinder, while the pressure drop also affects torque output. Therefore, this factor also needs to be taken into account when estimating the first torque or the torque reduction amount.

In other optional embodiments, instead of determining a new ignition angle, an ignition retard value may be determined directly.

Specifically, a corresponding retard coefficient may be determined by obtaining the intake air temperature of the engine, the rotational speed of the engine, the engine load, and the amount of pressure drop in the cylinder, and then the ignition retard value may be determined based on the retard coefficient. A neural network model configured to determine the ignition retard angle may be established, and relevant training data may be collected to train the model. The trained neural network model may be deployed on the PCU, and subsequently the neural network model may be configured to determine the ignition retard value, which is not only convenient and fast but also more accurate.

In determining the ignition retard angle, the embodiments of the present application comprehensively consider factors related to engine output torque. This not only prevents the engine from being unable to quickly reduce the output torque to the demanded torque, but also avoids excessive torque reduction, i.e., reducing the torque below the demanded torque, thereby improving the accuracy of torque adjustment and further ensuring vehicle smoothness.

In other optional embodiments, in order to ensure that the vehicle engine can rapidly respond to a rapid drop in demanded torque, a neural network model may also be employed to predict driving demands. For example, navigation-related information, road condition information collected in real time by a vehicle, road condition information collected by roadside devices ahead, and driver behavior information may be input into a pre-trained neural network model to predict the vehicle torque demand at the next moment, such that the vehicle may perform an engine torque reduction operation in advance, or make preparations for engine torque reduction in advance.

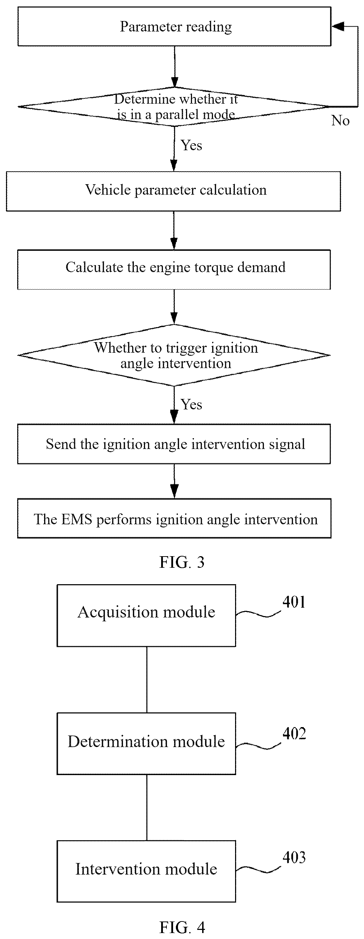

In this embodiment, a vehicle control method is provided, which is applicable to a plug-in hybrid electric vehicle. As shown in FIG. 3, the flow includes the following steps:
Step 1: parameter reading, i.e., parameter signals received by a powertrain control unit (PCU), including vehicle speed, throttle opening degree, brake pedal state, battery state of charge (SOC), braking energy recovery torque, P1 generator rotational speed and torque, P3 drive motor rotational speed and torque, and rotational speed and torque of the engine.
Step 2: determine the operating state of the powertrain, i.e., a series mode or a parallel mode. Generally speaking, when driving at low speeds, the vehicle mainly operates in a series mode, while when driving at high speeds, the vehicle mainly operates in a parallel mode. When a plug-in hybrid electric vehicle (PHEV) is driving in a parallel mode, the engine directly drives the vehicle. During tip-out or braking, rapid engine torque response is required to prevent unintended acceleration or shudder, thereby preventing drivability issues. Therefore, this control method applies only to the parallel mode and is not employed in the series mode.
Step 3: vehicle parameter calculation. The PCU calculates the rotational speed and torque of the engine in real time based on the read parameters. In the parallel state, the engine directly drives the vehicle. The rotational speed of the engine may be determined based on the wheel speed and the transmission gear ratio. The engine torque is determined based on the demanded power of the entire vehicle. The demanded power of the entire vehicle may be determined based on the throttle opening degree, the brake pedal state, the braking energy recovery torque and the like.
Step 4: The PCU outputs the demanded torque of the engine to an EMS. The EMS outputs the demanded torque of the engine by reducing the intake air amount. In this embodiment, the intake air amount may be reduced by closing a throttle valve. The throttle valve herein may employ a throttle valve with variable valve lift, and specifically, a throttle valve with two-stage variable valve lift can be selected. The throttle valve herein may be controlled by an electronic throttle, and the throttle opening degree may be controlled by fast electronic signals, thereby rapidly reducing the intake air amount and achieving a rapid response to torque reduction.
Step 5: determine whether to trigger ignition angle intervention control. The determination method is to compare the engine demanded torque requested by the PCU with a set minimum load threshold of the engine (the minimum load threshold of the engine is the minimum stable torque at which the engine can operate across various rotational speeds as the throttle valve closes). At the same time, the torque reduction slope (the torque slope threshold achievable when the engine closes the throttle valve to reduce the intake air amount) is considered. An OR operation is performed on the two conditions to determine whether to activate the ignition angle intervention control.
Step 6: The PCU sends the determined ignition angle intervention signal to the EMS.
Step 7: The EMS achieves the rapid torque request from the PCU by retarding the ignition angle. The amount of ignition retard is not a fixed value. It can be understood that the efficiency at a normal ignition angle is 1. As the ignition angle is retarded, the ignition angle efficiency gradually decreases, and the torque gradually decreases. Based on this efficiency relationship, it is possible to determine how much ignition angle retard is needed to achieve the torque demanded by the PCU.

The plug-in hybrid electric vehicle mentioned above belongs to a series-parallel hybrid electric vehicle, which can operate in either a parallel mode or a series mode. Among hybrid vehicles, there is also a parallel hybrid electric vehicle. The embodiments of the present application are also applicable to such parallel hybrid electric vehicles.

A vehicle control apparatus is further provided in this embodiment. The apparatus is configured to implement the above embodiments and optional embodiments, which have already been described and will not be repeated herein. As used below, the term "module" may be a combination of software and/or hardware that implements a predetermined function. Although the apparatus described in the following embodiments is preferably implemented in software, implementations in hardware, or a combination of software and hardware, are also possible and contemplated.

This embodiment provides a vehicle control apparatus. As shown in FIG. 4, the apparatus includes:
an acquisition module 401 configured to acquire a current torque and a demanded torque of an engine, wherein the current torque and the demanded torque are both torques for driving a vehicle;
a determination module 402 configured to, when the demanded torque is less than the current torque, determine a magnitude relationship between the demanded torque and a preset threshold, and/or determine a magnitude relationship between a torque reduction slope and a torque slope threshold, wherein the torque slope threshold is a minimum torque slope that can be achieved by the engine at a current rotational speed by reducing an intake air amount; and
an intervention module 403 configured to, when the demanded torque is less than the preset threshold or the torque reduction slope is less than the torque slope threshold, determine an ignition retard angle.

The vehicle control apparatus provided in this embodiment is applicable to scenarios where a hybrid vehicle is operating in a parallel mode and events such as a rapid tip-out, braking, or a switch to a series mode occur, or to scenarios where a conventional fuel vehicle experiences a rapid tip-out or braking. In these scenarios, the demanded torque for the engine to directly drive the vehicle drops suddenly. The vehicle control solution provided in this embodiment ensures that the engine can respond promptly to the reduced torque demand, thereby avoiding unintended acceleration or shudder. This effectively prevents drivability issues, improves vehicle smoothness, and further enhances the driving experience.

In some optional embodiments, the intervention module 403 includes:
a first torque acquisition unit configured to acquire a first torque after the intake air amount of the engine is reduced; and
a new ignition angle determination unit configured to determine a new ignition angle based on the first torque.

In some optional embodiments, the acquisition module 401 includes:
an entire vehicle demanded power acquisition unit configured to acquire a demanded power of the entire vehicle; and
a demanded torque determination unit configured to determine the demanded torque based on the demanded power.

In some optional embodiments, the entire vehicle demanded power acquisition unit includes:
a first parameter acquisition subunit configured to acquire target parameters, wherein the target parameters include at least one of the following: throttle opening degree, brake pedal state, braking energy recovery torque, and battery state of charge; and
a demanded power determination subunit configured to determine the demanded power based on the target parameters.

In some optional embodiments, the demanded torque determination unit includes:
a second parameter acquisition subunit configured to acquire a rotational speed of the engine, and a rotational speed and a torque of a drive motor; and
a demanded torque calculation subunit configured to determine the demanded torque of the engine based on the rotational speed of the engine, the rotational speed and the torque of the drive motor, and the demanded power of the entire vehicle.

In some optional embodiments, the apparatus further includes:
a correspondence acquisition module configured to acquire a correspondence relationship between a rotational speed of the engine and the preset threshold; and
a preset threshold determination module configured to determine the preset threshold corresponding to the current rotational speed of the engine based on the acquired correspondence relationship.

Further functional descriptions of the above modules, units, and subunits are the same as those in the corresponding embodiments described above, and will not be repeated herein.

The vehicle control apparatus in this embodiment is presented in the form of functional units. The term "unit" herein refers to an ASIC (Application Specific Integrated Circuit), a processor and a memory that execute one or more software programs or fixed programs, and/or other devices capable of providing the above functions.

An embodiment of the present application further provides a vehicle equipped with the vehicle control apparatus shown in FIG. 4.

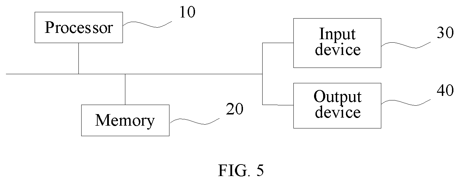

Please refer to FIG. 5. FIG. 5 is a schematic structural diagram of a vehicle according to an optional embodiment of the present application. As shown in FIG. 5, the vehicle includes: one or more processors 10, a memory 20, and interfaces configured to connect various components, including high-speed interfaces and low-speed interfaces. The various components are communicatively connected with each other via different buses and may be mounted on a common motherboard or otherwise mounted as needed. The processor may process instructions executed within a computer device of the vehicle. The instructions include those stored in or on the memory to display graphical information of a GUI (Graphical User Interface) on an external input/output device (e.g., a display device coupled to an interface). In some optional embodiments, if necessary, multiple processors and/or multiple buses may be used together with multiple memories. Similarly, multiple computer devices may be connected, with each device providing a portion of necessary operations (e.g., as a server array, a set of blade servers, or a multiprocessor system). FIG. 5 takes one processor 10 as an example.

The processor 10 may be a central processing unit, a network processor, or a combination thereof. The processor 10 may further include a hardware chip. The above hardware chip may be an application specific integrated circuit, a programmable logic device, or a combination thereof. The above programmable logic device may be a complex programmable logic device, a field programmable gate array, a generic array logic, or any combination thereof.

The memory 20 stores instructions that, when executed by the at least one processor 10, cause the at least one processor 10 to perform the method shown in the above embodiments.

The memory 20 may include a program storage area and a data storage area. The program storage area may store an operating system and applications required for at least one function. The data storage area may store data created according to the use of the computer device of the vehicle. In addition, the memory 20 may include a high-speed random-access memory, and may also include a non-transitory memory, such as at least one magnetic disk storage device, a flash memory device, or other non-transitory solid-state storage device. In some optional embodiments, the memory 20 may optionally include memories that are remotely located relative to the processor 10, and such remote memories may be connected to the computer device of the vehicle via a network. Examples of such networks include, but are not limited to, the Internet, an intranet, a local area network, a mobile communication network, and combinations thereof.

The memory 20 may include a volatile memory, e.g., a random-access memory; the memory may also include a non-volatile memory, e.g., a flash memory, a hard disk, or a solid-state hard disk; and the memory 20 may also include a combination of the above types of memories.

The vehicle further includes an input device 30 and an output device 40. The processor 10, the memory 20, the input device 30, and the output device 40 may be connected via a bus or other means, and FIG. 5 takes a connection via a bus as an example.

The input device 30 may receive input numeric or character information and generate key signal inputs related to user settings and function control of the computer device of the vehicle, such as a touch screen, a keypad, a mouse, a trackpad, a touchpad, a pointing stick, one or more mouse buttons, a trackball, and a joystick. The output device 40 may include a display device, an auxiliary lighting device (e.g., an LED), and a tactile feedback device (e.g., a vibration motor) and the like. The display device includes, but is not limited to, a liquid crystal display, an LED, a display, and a plasma display. In some optional embodiments, the display device may be a touch screen.

The vehicle further includes a communication interface configured to enable a computer device of the vehicle to communicate with other devices or a communication network.

An embodiment of the present application further provides a computer-readable storage medium. The method according to the embodiments of the present application described above may be implemented in hardware or firmware. Alternatively, the method may be implemented as computer code that can be recorded on a storage medium, or downloaded via a network. Such computer code is originally stored in a remote storage medium or a non-transitory machine-readable storage medium and then stored in a local storage medium. Therefore, the method described herein may be implemented by software stored on a storage medium, which can be executed by a general-purpose computer, a dedicated processor, or programmable or dedicated hardware. The storage medium may be a magnetic disk, an optical disk, a read-only memory, a random-access memory, a flash memory, a hard disk, a solid-state hard disk, or the like. Optionally, the storage medium may also include a combination of the above types of memories. It can be understood that a computer, a processor, a microprocessor controller, or programmable hardware includes storage components capable of storing or receiving software or computer code. When the software or computer code is accessed and executed by the computer, the processor, or the hardware, the method illustrated in the above embodiments is implemented.

Although the embodiments of the present application have been described with reference to the accompanying drawings, those skilled in the art may make various modifications and variations without departing from the spirit and scope of the present application, and such modifications and variations shall all fall within the scope defined by the appended claims.

## Claims

1. A vehicle control method, comprising:
acquiring a current torque and a demanded torque of an engine, wherein the current torque and the demanded torque are both torques for driving a vehicle;
when the demanded torque is less than the current torque, determining a magnitude relationship between the demanded torque and a preset threshold, and/or determining a magnitude relationship between a torque reduction slope and a torque slope threshold, wherein the torque slope threshold is a minimum torque slope that can be achieved by the engine at a current rotational speed by reducing an intake air amount; and
when the demanded torque is less than the preset threshold or the torque reduction slope is less than the torque slope threshold, determining an ignition retard angle.

2. The method according to claim 1, wherein the step of determining an ignition retard angle comprises:
acquiring a first torque after the intake air amount of the engine is reduced; and
determining a new ignition angle based on the first torque.

3. The method according to claim 1 or 2, wherein the step of acquiring a current torque and a demanded torque of an engine comprises:
acquiring a demanded power of the entire vehicle; and
determining the demanded torque based on the demanded power.

4. The method according to claim 3, wherein the step of acquiring a demanded power of the entire vehicle comprises:
acquiring target parameters, wherein the target parameters comprise at least one of the following: throttle opening degree, brake pedal state, braking energy recovery torque, and battery state of charge; and
determining the demanded power based on the target parameters.

5. The method according to claim 3, wherein the step of determining the demanded torque based on the demanded power comprises:
acquiring a rotational speed of the engine, and a rotational speed and a torque of a drive motor; and
determining the demanded torque of the engine based on the rotational speed of the engine, the rotational speed and the torque of the drive motor, and the demanded power of the entire vehicle.

6. The method according to claim 1 or 2, wherein before determining a magnitude relationship between the demanded torque and a preset threshold, the method further comprises:
acquiring a correspondence relationship between a rotational speed of the engine and the preset threshold; and
determining the preset threshold corresponding to the current rotational speed of the engine based on the acquired correspondence relationship.

7. A vehicle control apparatus, comprising:
an acquisition module configured to acquire a current torque and a demanded torque of an engine, wherein the current torque and the demanded torque are both torques for driving a vehicle;
a determination module configured to, when the demanded torque is less than the current torque, determine a magnitude relationship between the demanded torque and a preset threshold, and/or determine a magnitude relationship between a torque reduction slope and a torque slope threshold, wherein the torque slope threshold is a minimum torque slope that can be achieved by the engine at a current rotational speed by reducing an intake air amount; and
an intervention module configured to, when the demanded torque is less than the preset threshold or the torque reduction slope is less than the torque slope threshold, determine an ignition retard angle.

8. The apparatus according to claim 7, wherein the intervention module comprises:
a first torque acquisition unit configured to acquire a first torque after the intake air amount of the engine is reduced; and
a new ignition angle determination unit configured to determine a new ignition angle based on the first torque.

9. The apparatus according to claim 7 or 8, wherein the acquisition module comprises:
an entire vehicle demanded power acquisition unit configured to acquire a demanded power of the entire vehicle; and
a demanded torque determination unit configured to determine the demanded torque based on the demanded power.

10. The apparatus according to claim 9, wherein the entire vehicle demanded power acquisition unit comprises:
a first parameter acquisition subunit configured to acquire target parameters, wherein the target parameters comprise at least one of the following: throttle opening degree, brake pedal state, braking energy recovery torque, and battery state of charge; and
a demanded power determination subunit configured to determine the demanded power based on the target parameters.

11. The apparatus according to claim 9, wherein the demanded torque determination unit comprises:
a second parameter acquisition subunit configured to acquire a rotational speed of the engine, and a rotational speed and a torque of a drive motor; and
a demanded torque calculation subunit configured to determine the demanded torque of the engine based on the rotational speed of the engine, the rotational speed and the torque of the drive motor, and the demanded power of the entire vehicle.

12. The apparatus according to claim 7 or 8, further comprising:
a correspondence acquisition module configured to acquire a correspondence relationship between a rotational speed of the engine and the preset threshold; and
a preset threshold determination module configured to determine the preset threshold corresponding to the current rotational speed of the engine based on the acquired correspondence relationship.

13. A vehicle, comprising:
a memory and a processor, wherein the memory and the processor are communicatively connected to each other; the memory has computer instructions stored therein; and the processor is configured to execute the computer instructions to perform the vehicle control method according to any one of claims 1 to 6.

14. A computer-readable storage medium, wherein the computer-readable storage medium has computer instructions stored therein, and the computer instructions are configured to cause a computer to perform the vehicle control method according to any one of claims 1 to 6.
